(19) Europäisches Patentamt
European Patent Office
Office européen des brevets

(11) EP 2 388 926 B1

(12) EUROPEAN PATENT SPECIFICATION

(45) Date of publication and mention
of the grant of the patent:
**22.08.2018 Bulletin 2018/34**

(51) Int Cl.:
*H04L 1/06* (2006.01)         *H04B 7/04* (2017.01)
*H04B 7/06* (2006.01)         *H04L 1/00* (2006.01)

(21) Application number: **09839907.4**

(22) Date of filing: **17.12.2009**

(86) International application number:
**PCT/CN2009/075681**

(87) International publication number:
**WO 2010/091584 (19.08.2010 Gazette 2010/33)**

(54) **DEVICE AND METHOD FOR TRANSMISSION WITH MULTIPLE ANTENNAS**

VORRICHTUNG UND VERFAHREN ZUR ÜBERTRAGUNG MIT MEHREREN ANTENNEN

DISPOSITIF ET PROCÉDÉ DE TRANSMISSION AVEC PLUSIEURS ANTENNES

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **16.02.2009 CN 200910078096**

(43) Date of publication of application:
**23.11.2011 Bulletin 2011/47**

(73) Proprietor: **ZTE Corporation
Shenzhen, Guangdong 518057 (CN)**

(72) Inventors:
• **WANG, Yanwen
Shenzhen
Guangdong 518057 (CN)**
• **LU, Xianming
Shenzhen
Guangdong 518057 (CN)**
• **ZHANG, Li
Shenzhen
Guangdong 518057 (CN)**

(74) Representative: **J A Kemp
14 South Square
Gray's Inn
London WC1R 5JJ (GB)**

(56) References cited:
WO-A1-2008/077056       WO-A2-2007/105904
CN-A- 1 960 199         CN-A- 101 171 817
US-A1- 2008 102 881     US-A1- 2008 108 310
US-A1- 2008 267 318     US-A1- 2008 273 452

• CHAE C-B ET AL: "Space-time block codes with limited feedback using antenna grouping", IEICE TRANSACTIONS ON COMMUNICATIONS, COMMUNICATIONS SOCIETY, TOKYO, JP, vol. E91B, no. 10, 1 October 2008 (2008-10-01), pages 3387-3390, XP001517535, ISSN: 0916-8516, DOI: 10.1093/IETCOM/E91-B.10.3387
• ALCATEL SHANGHAI BELL ET AL: "Beam-forming for single-cell E-MBMS in LTE-A", 3GPP DRAFT; R1-084135_BEAM-FORMING FOR SINGLE-CELL MBMS IN LTE-A, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Prague, Czech Republic; 20081110 - 20081114, 5 November 2008 (2008-11-05), XP050597135, [retrieved on 2008-11-05]
• MOTOROLA: "LTE-A DL-MIMO Enhancements --- 8-Tx eNB and MU-MIMO Optimization", 3GPP DRAFT; R1-084406 DL-MIMO ENHANCEMENT (MOTOROLA), 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Prague, Czech Republic; 20081105, 5 November 2008 (2008-11-05), XP050317668, [retrieved on 2008-11-05]

**Description**

**TECHNICAL FIELD**

The present invention relates to a carrier frequency processing technology in mobile communication system, and in particular to a device and method for realizing multi-antenna diversity.

**BACKGROUND**

In a 3Gpp Long-Term Evolution (LTE) system, the downlink defines a diversity mode as Space Frequency Block Codes (SFBC) when there are two transmission antennae, and the encoding matrix thereof is

$$\begin{bmatrix} x_1 & -x_2^* \\ x_2 & x_1^* \end{bmatrix}$$

. All the rows of the encoding matrix correspond to different frequencies, and all the columns thereof correspond to different antennae. The line data of the encoding matrix represents data sent on corresponding frequency, and the column data thereof represents data mapped to corresponding antenna. Specifically, from top to down, the first line represents data sent on frequency 1, and the second line represents data sent on frequency 2; from left to right, the first column represents data mapped to antenna 1, and the second column represents data mapped to antenna 2. Moreover, $x_1$ and $x_2$ are symbols before space frequency block coding, $x^*$ represents the conjugation of x, for example, $x_1^*$ represents the conjugation of X1.

In the LTE system, the downlink also defines a diversity mode as SFBC + Frequency Switch Time Division (SFBC+FSTD) when there are four transmission antennae, and the encoding matrix thereof is

$$\begin{bmatrix} x_1 & 0 & -x_2^* & 0 \\ x_2 & 0 & x_1^* & 0 \\ 0 & x_3 & 0 & -x_4^* \\ 0 & x_4 & 0 & x_3^* \end{bmatrix}$$

. All the rows of the encoding matrix correspond to different frequencies, and all the columns thereof correspond to different antennae. The line data of the encoding matrix represents data sent on corresponding frequency, and the column data thereof represents data mapped to corresponding antenna. Specifically, from top to down, the first line represents data sent on frequency 1, the second line represents data sent on frequency 2, the third line represents data sent on frequency 3, and the fourth line represents data sent on frequency 4; from left to right, the first column represents data mapped to antenna 1, the second column represents data mapped to antenna 2, the third column represents data mapped to antenna 3, and the fourth column represents data mapped to antenna 4. Moreover, $x_1$, $x_2$,

$x_3$ and $x_4$ are symbols before space frequency block coding, $x^*$ represents the conjugation of x, for example, $x_1^*$ represents the conjugation of $x_1$.

In a 3Gpp Long-Term Evolution Advanced (LTE-A) system, in order to enhance downlink data transmission rate and frequency spectrum utilization rate and obtain more diversity gain, the downlink can utilize at most eight antennae for transmission. However, in the case of eight antennae, there has not developed a corresponding solution by far to realize the multi-antenna diversity when there are eight antennae.

The document WO2007105904 A2 discloses a wirelesss communication system and more particularly a method for signals in a system using a plurality of antennas. The document WO2008077056 A1 discloses methods and apparatus for increasing diversity gain at a receiver by applying beamforming to transmit diversity spacetime coded signals.

**SUMMARY**

In view of the problem above, the purpose of the present invention is to provide a device and method for realizing multi-antenna diversity, capable of realizing efficient and directional coverage multi-antenna diversity in the case of eight or more antennae, thereby improving diversity gain.

In order to achieve the purpose above, the technical solution of the present invention is defined by the appended independent claims. Further implementation details are provided by the appended dependent claims. To sum up, the adoption of the present invention better solves the transmission and data transfer in the case of eight antennae, even more antennae, capable of realizing the efficient and directional covering multi-antenna diversity in the case of multiple antennae, thereby improving diversity gain.

**BRIEF DESCRIPTION OF THE DRAWINGS**

    Fig. 1 shows a structural diagram of a device according to the present invention;
    Fig. 2 shows a flowchart of implementing a method according to the present invention;
    Fig. 3 shows a schematic diagram of the mapping from the virtual antenna ports to the actual antenna groups;
    Fig. 4 shows a schematic diagram of generating the grouping beams corresponding to the multi-antenna groups.

**DETAILED DESCRIPTION**

The basic idea of the present invention is: setting an encoding matrix, in which a certain antenna in the entire space is replaced by a subspace, and a subspace corresponds to an antenna group which includes a plurality of antennae. The encoding performed according to the encoding matrix is applied in combination with the grouping beams, generated by performing beam generation and correspond to antenna groups, to construct a solution for carrier frequency encoding in the case of eight or more antennae in the multi-input multi-output system of the present invention, capable of obtaining obvious diversity gain.

The implementation of the technical solution will be illustrated with reference to the accompanying drawings hereinafter.

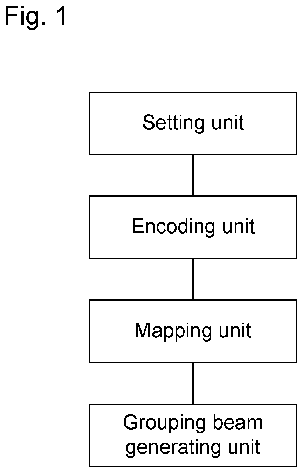

As shown in Fig. 1, a device for realizing multi-antenna diversity comprises a setting unit, an encoding unit, a mapping unit and a grouping beam generating unit. The setting unit is used for setting an encoding matrix and sending the encoding matrix to the encoding unit. The encoding unit is used for encoding input initial data according to the encoding matrix. The mapping unit is used for obtaining encoded column data from the encoding unit and mapping the encoded column data to the antenna groups corresponding to subspaces. The grouping beam generating unit is used for performing beam generation and generating grouping beams corresponding to the antenna groups.

Here, the grouping beam generating unit is further used for calculating weights according to channel information fed back by a terminal side and generating directional grouping beams corresponding to the antenna groups.

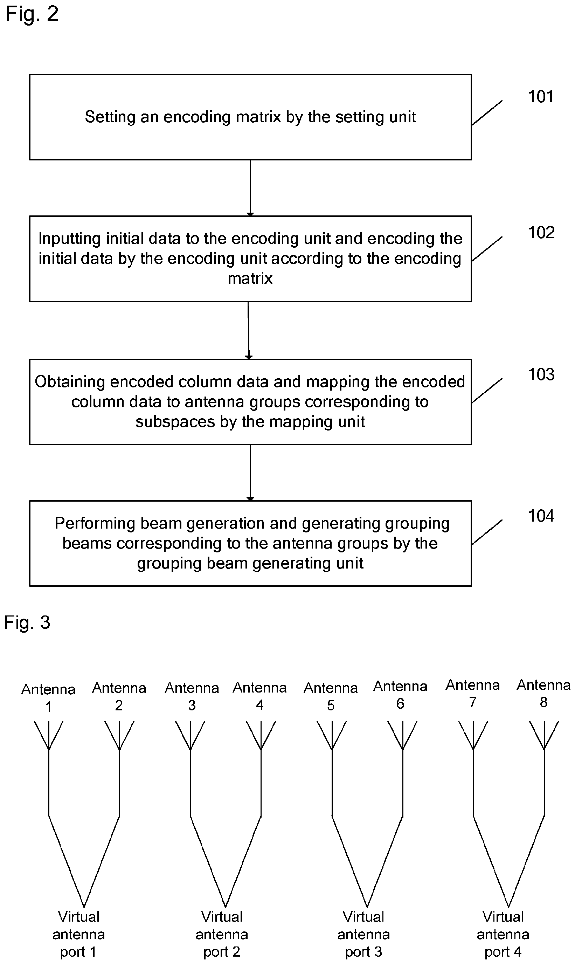

As shown in Fig. 2, a method for realizing multi-antenna diversity comprises:

Step 101: setting an encoding matrix by the setting unit.
Step 102: inputting initial data to the encoding unit and encoding the initial data by the encoding unit according to the encoding matrix.
Step 103: obtaining encoded column data and mapping the encoded column data to antenna groups corresponding to subspaces by the mapping unit.

Here, the specific process of Step 103 is that: the mapping unit maps the encoded column data via a port to the antenna groups corresponding to the subspaces. The port mentioned in the present invention can be considered as a virtual antenna port which is different from an actual antenna port corresponding to an antenna in the prior art. The antenna group mentioned in the present invention can be considered as an actual antenna group including a plurality of antennae.

Besides, when mapping, the encoded column data are mapped via a port to a plurality of antenna groups each of which includes a plurality of antennae.

Step 104: performing beam generation and generating grouping beams corresponding to the antenna groups by the grouping beam generating unit.

Here, the specific process of Step 104 is that: at the grouping beam generating unit, an antenna group calculates a weight according to channel information fed back by a terminal side and generates an directional grouping beam corresponding to the antenna group.

A main lobe of a directional grouping beam directs the DOA at which the energy of the transmission signals of the antennae in the antenna group is the greatest.

For the technical solution above composed of Step 101 to Step 104, in Step 101, the set encoding matrix

is: $\begin{bmatrix} x_1 & 0 & -x_2^* & 0 \\ x_2 & 0 & x_1^* & 0 \\ 0 & x_3 & 0 & -x_4^* \\ 0 & x_4 & 0 & x_3^* \end{bmatrix}$, in which $x_1$, $x_2$, $x_3$ and $x_4$ represent the initial data; the frequencies corresponding to different rows of the encoding matrix are different neighboring sub-carriers, specifically sub-carrier 1, sub-carrier 2, sub-carrier 3 and sub-carrier 4 in turn from top to down; the spaces corresponding to different columns of the encoding matrix are different neighboring subspaces obtained by dividing the entire space omni-directionally covered by the transmission signals of the antennae, specifically subspace 1, subspace 2, subspace 3 and subspace 4 in turn from left to right.

Specifically, the line data of the encoding matrix represents the data sent on the different neighboring sub-carries; specifically, from top to down, the first line represents the data sent on sub-carrier 1, the second line represents the data sent on sub-carrier 2, the third line represents the data sent on sub-carrier 3, and the fourth line represents the data sent on sub-carrier 4. The column data of the encoding matrix represents the data mapped to the antenna groups corresponding to different neighboring subspaces; specifically, from left to right, the first column represents the data mapped to the antenna group corresponding to subspace 1; the second column represents the data mapped to the antenna group corresponding to subspace 2; the third column represents the data mapped to the antenna group corresponding to subspace 3, and the fourth column represents the data mapped to the antenna group corresponding to subspace 4. Furthermore, in the condition that the encoding mode is SF-BC, $x_1$, $x_2$, $x_3$ and $x_4$ are the symbols before space frequency block coding, $x^*$ represents the conjugation of x, for example, $x_1^*$ represents the conjugation of $x_1$.

In Step 102, the encoding mode may specifically be SFBC. Initial data $x_1$, $x_2$, $x_3$ and $x_4$ are input to the encoding unit and the encoding unit performs SFBC according to the encoding matrix. Here, $\begin{bmatrix} x_1 & 0 & -x_2^* & 0 \end{bmatrix}$ is sent on sub-carrier 1, $\begin{bmatrix} x_2 & 0 & x_1^* & 0 \end{bmatrix}$ is sent on sub-carrier 2,

$$\begin{bmatrix} 0 & x_3 & 0 & -x_4^* \end{bmatrix}$$ is sent on sub-carrier 3, and

$$\begin{bmatrix} 0 & x_4 & 0 & -x_3^* \end{bmatrix}$$ is sent on sub-carrier 4.

It should be noted that, the encoding mode is various and is not limited to SFBC; the encoding mode may also be Space Time Block Codes (STBC).

In Step 103, the mapping unit maps $\begin{bmatrix} x_1 \\ x_2 \\ 0 \\ 0 \end{bmatrix}$ to antenna group 1 corresponding to subspace 1, maps $\begin{bmatrix} 0 \\ 0 \\ x_3 \\ x_4 \end{bmatrix}$ to antenna group 2 corresponding to subspace 2,

maps $\begin{bmatrix} -x_2^* \\ x_1^* \\ 0 \\ 0 \end{bmatrix}$ to antenna group 3 corresponding to subspace 3, and maps $\begin{bmatrix} 0 \\ 0 \\ -x_4^* \\ x_3^* \end{bmatrix}$ to antenna group 4 corresponding to subspace 4.

Further, in the specific process of Step 104, at the grouping beam generating unit, the antenna group 1 corresponding to the subspace 1 calculates, according to the channel information fed back by the terminal side, a first weight [$w_{11}$ $w_{12}$] by which a directional grouping beam 1 corresponding to the antenna group 1 is generated, and the data sent by the directional grouping beam 1 is $\begin{bmatrix} x_1 w_{11} + x_1 w_{12} \\ x_2 w_{11} + x_2 w_{12} \\ 0 \\ 0 \end{bmatrix}$. At the grouping beam generating unit, the antenna group 2 corresponding to the subspace 2 calculates, according to the channel information fed back by the terminal side, a second weight [$w_{21}$ $w_{22}$] by which a directional grouping beam 2 corresponding to the antenna group 2 is generated, and the data sent by the directional grouping beam 2 is $\begin{bmatrix} 0 \\ 0 \\ x_3 w_{21} + x_3 w_{22} \\ x_4 w_{21} + x_4 w_{22} \end{bmatrix}$. At the grouping beam generating unit, the antenna group 3 corresponding to the subspace 3 calculates, according to the channel information fed back by the terminal side, a third weight [$w_{31}$ $w_{32}$] by which a directional grouping beam 3 corresponding to the antenna group 3 is generated, and the data sent by the directional grouping beam 3 is $\begin{bmatrix} -x_2^* w_{31} - x_2^* w_{32} \\ x_1^* w_{31} + x_1^* w_{32} \\ 0 \\ 0 \end{bmatrix}$. At the grouping beam generating unit, the antenna group 4 corresponding to the subspace 4 calculates, according to the channel information fed back by the terminal side, a fourth weight [$w_{41}$ $w_{42}$] by which a directional grouping beam 4 corresponding to the antenna group 4 is generated, and the data sent by the directional grouping beam 4 is $\begin{bmatrix} 0 \\ 0 \\ -x_4^* w_{41} - x_4^* w_{42} \\ x_3^* w_{41} + x_3^* w_{42} \end{bmatrix}$.

The method embodiment described hereinafter is the carrier frequency processing method applied in LTE-A system in the case of eight antennae, which may also be called as a transmission method of LTE-A system in the case of eight antennae. By adopting the method in the LTE-A system, the eight-antenna downlink SFBC is combined with grouping beam generation, that is, the data encoded by the SFBC are mapped via different virtual antenna ports to the actual antenna groups and then a plurality of different antenna groups performs grouping beam generation respectively. Therefore, in the LTE-A system, by adopting the technical solution that the carrier frequency encoding or SFBC is combined with eight-antenna grouping beam generation, compared with existing diversity technology of the simple four-antenna SFBC, the eight-antenna carrier frequency encoding not only has diversity gain but also has power gain and expands coverage in the condition that the transmission power of each antenna is the same. Therefore, by adopting the method embodiment, the technical solution that SFBC is combined with eight-antenna grouping beam generation will bring many benefits to the system. The method embodiment is described hereinafter in detail.

The method embodiment is: a carrier frequency processing method applied in the LTE-A system in the case of eight antennae. In the method embodiment, the implementation flow of the carrier frequency processing method comprises the following steps of:

Step 201: setting an encoding matrix as

$$\begin{bmatrix} x_1 & 0 & -x_2^* & 0 \\ x_2 & 0 & x_1^* & 0 \\ 0 & x_3 & 0 & -x_4^* \\ 0 & x_4 & 0 & x_3^* \end{bmatrix}$$, in which $x_1$, $x_2$, $x_3$ and $x_4$ are

symbols before encoding, the rows of the encoding matrix represent neighboring sub-carriers, specifically sub-carrier 1, sub-carrier 2, sub-carrier 3 and sub-carrier 4 in turn from top to down, and the columns thereof represent neighboring subspaces, specifically subspace 1, subspace 2, subspace 3 and subspace 4 in turn from left to right. Subspace 1, subspace 2, subspace 3 and subspace 4 correspond to the grouping beams generated by the antenna groups corresponding to the respective subspace, respectively. For example, subspace 1 corresponds to the grouping beam 1 generated by the antenna group 1 corresponding to the subspace 1.

Step 202: encoding according to the encoding matrix, specifically performing SFBC according to encoding matrix. Here, $\begin{bmatrix} x_1 & 0 & -x_2^* & 0 \end{bmatrix}$ is sent on the sub-carrier 1, $\begin{bmatrix} x_2 & 0 & x_1^* & 0 \end{bmatrix}$ is sent on the sub-carrier 2, $\begin{bmatrix} 0 & x_3 & 0 & -x_4^* \end{bmatrix}$ is sent on the sub-carrier 3, and $\begin{bmatrix} 0 & x_4 & 0 & -x_3^* \end{bmatrix}$ is sent on the sub-carrier 4.

Step 203: mapping from a port to an antenna group, that is, mapping the data encoded by SFBC via a virtual antenna port to the corresponding actual antenna group.

Here, as shown in Fig. 3, it is a schematic diagram of the mapping from the virtual antenna ports to the actual antenna groups. When mapping, the data encoded by SFBC is mapped via a virtual antenna port to at least one actual antenna group in which at least one antenna is included. For example, in the condition of eight antennae of the method embodiment, the eight antennae may be divided into four antenna groups each including two antennae. Specifically, a virtual antenna port 1 can be mapped to the antenna group 1 composed of antenna 1 and antenna 2, a virtual antenna port 2 can be mapped to the antenna group 2 composed of antenna 3 and antenna 4, a virtual antenna port 3 can be mapped to the antenna group 3 composed of antenna 5 and antenna 6, and a virtual antenna port 4 can be mapped to the antenna group 4 composed of antenna 7 and antenna 8.

Step 204: generating grouping beam, that is, performing beam generation for each antenna group.

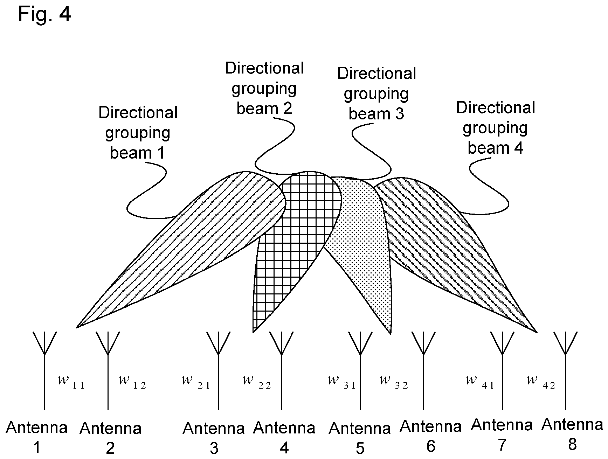

Here, for example, the eight antennae on base station side are divided into four antenna groups each including two antennae. Each antenna group calculates, according to the channel information fed back by the terminal side, a weight by which a directional grouping beam corresponding to each antenna group is generated. The main lobe of the directional grouping beam directs the DOA at which the energy of the transmission signals of the antennae in the antenna group is the greatest, as shown in the schematic diagram of generating the grouping beams corresponding to the multi-antenna groups in Fig. 4.

As shown in Fig. 4, beam generation is performed for a plurality of antenna groups. The directional grouping beam 1 is formed by the calculated weight $[w_{11}\ w_{12}]$, and the direction points at the terminal. The weight $[w_{11}\ w_{12}]$ is calculated according to the channel information fed back by the terminal side, and the weight is calculated according to the prior art, that is, the weight is calculated according to the DOA (Direction of Arrival) of signals. The main lobe of directional grouping beam 1 directs the DOA at which the energy of the transmission signals of the antennae in the antenna group 1 is the greatest, wherein the antenna group 1 is composed of antenna 1 and antenna 2.

Here, for the directional grouping beam 1 formed by the weight $[w_{11}\ w_{12}]$, the data sent by the directional grouping beam 1 is $\begin{bmatrix} x_1 w_{11} + x_1 w_{12} \\ x_2 w_{11} + x_2 w_{12} \\ 0 \\ 0 \end{bmatrix}$; that is, for the sub-carrier 1, the antenna 1 in antenna group 1 transmits $x_1 w_{11}$, and the antenna 2 transmits $x_1 w_{12}$; for the sub-carrier 2, the antenna 1 in antenna group 1 transmits $x_2 w_{11}$, and the antenna 2 transmits $x_2 w_{12}$.

The directional grouping beam 2 is formed by the calculated weight $[w_{21}\ w_{22}]$, and the direction points at the terminal. The weight $[w_{21}\ w_{22}]$ is calculated according to the channel information fed back by terminal side, and the weight is calculated according to the prior art, that is, the weight is calculated according to the DOA of signals. The main lobe of directional grouping beam 2 directs the DOA at which the energy of the transmission signals of the antennae in the antenna group 2 is the greatest, wherein the antenna group 2 is composed of antenna 3 and antenna 4.

Here, for the directional grouping beam 2 formed by the weight $[w_{21}\ w_{22}]$, the data sent by the directional grouping beam 2 is $\begin{bmatrix} 0 \\ 0 \\ x_3 w_{21} + x_3 w_{22} \\ x_4 w_{21} + x_4 w_{22} \end{bmatrix}$; that

is, for the sub-carrier 3, the antenna 3 in antenna group 2 transmits $x_3 w_{21}$, and the antenna 4 transmits $x_3 w_{22}$; for the sub-carrier 4, the antenna 3 in antenna group 2 transmits $x_4 w_{21}$, and the antenna 4 transmits $x_4 w_{22}$.

The directional grouping beam 3 is formed by the calculated weight $[w_{31}\ w_{32}]$, and the direction points at terminal. The weight $[w_{31}\ w_{32}]$ is calculated according to the channel information fed back by terminal side, and the weight is calculated according to the prior art, that is, the weight is calculated according to the DOA of signals. The main lobe of directional grouping beam 3 directs the DOA at which the energy of the transmission signals of the antennae in the antenna group 3 is the greatest, wherein the antenna group 3 is composed of antenna 5 and antenna 6.

Here, for the directional grouping beam 3 formed by the weight $[w_{31}\ w_{32}]$, the data sent by the directional grouping beam 3 is $\begin{bmatrix} -x_2^* w_{31} - x_2^* w_{32} \\ x_1^* w_{31} + x_1^* w_{32} \\ 0 \\ 0 \end{bmatrix}$; that

is, for the sub-carrier 1, the antenna 5 in antenna group 3 transmits $-x_2^* w_{31}$, and the antenna 6 transmits $-x_2^* w_{32}$; for the sub-carrier 2, the antenna 5 in antenna group 3 transmits $x_1^* w_{31}$, and the antenna 6 transmits $x_1^* w_{32}$.

The directional grouping beam 4 is formed by the calculated weight $[w_{41}\ w_{42}]$, and the direction points at terminal. The weight $[w_{41}\ w_{42}]$ is calculated according to the channel information fed back by terminal side, and the weight is calculated according to the prior art, that is, the weight is calculated according to the DOA of signals. The main lobe of directional grouping beam 4 directs the DOA at which the energy of the transmission signals of the antennae in the antenna group 4 is the greatest, wherein the antenna group 4 is composed of antenna 7 and antenna 8.

Here, for the directional grouping beam 4 formed by the weight $[w_{41}\ w_{42}]$, the data sent by the directional grouping beam 4 is $\begin{bmatrix} 0 \\ 0 \\ -x_4^* w_{41} - x_4^* w_{42} \\ x_3^* w_{41} + x_3^* w_{42} \end{bmatrix}$; that

is, for the sub-carrier 3, the antenna 7 in antenna group 4 transmits $-x_4^* w_{41}$, and the antenna 8 transmits $-x_4^* w_{42}$; for the sub-carrier 4, the antenna 7 in antenna group 4 transmits $x_3^* w_{41}$, and the antenna 8 transmits $x_3^* w_{42}$.

To sum up, through the method embodiment, a carrier frequency processing method applied in the LTE-A system in the case of eight antennae is provided; the carrier frequency processing method may also be called as a carrier frequency encoding transmission method. In the LTE-A system, the eight-antenna downlink SFBC is combined with the grouping beam generation to correspond different symbols to different subspace beams, which solves the problem in the prior art that no space frequency processing method is provided in the case of eight antennae, that is, solves the problem that the multi-antenna diversity in the case of eight antennae cannot be achieved in the prior art. By adopting the method embodiment, when different sub-carriers send signals, the omni-directional covering beam in the prior art is replaced by the directional covering beam which not only has a greater coverage but also has a directionality. Compared with the diversity technology of the simple four-antenna SFBC, the eight-antenna carrier frequency encoding will bring, when the transmission power of each antenna is the same, 3db of equivalent power gain, which is particularly important in the condition that the channel power is limited. Furthermore, the method can obtain better diversity gain and better coverage in the condition that extra pilot frequency overhead is not increased.

The above is only the preferred embodiment of the present invention and the protection scope of the present invention is defined by the appended claims.

**Claims**

1. A device for realizing multi-antenna transmission diversity, comprising a setting unit, an encoding unit, a mapping unit and a grouping beam generating unit, wherein
   the setting unit is used for setting an encoding matrix and sending the encoding matrix to the encoding unit;
   the encoding unit is used for encoding input initial data according to the encoding matrix and obtaining an encoded matrix;

the mapping unit is used for obtaining column data of the encoded matrix from the encoding unit and mapping the encoded column data via virtual antenna ports to antenna groups corresponding to subspaces; and

wherein the grouping beam generating unit is further used for calculating weights according to channel information fed back by a terminal side and generating directional grouping beams corresponding to the antenna groups;

wherein the antenna groups comprises an antenna group 1 including an antenna 1 and an antenna 2, an antenna group 2 including an antenna 3 and an antenna 4, an antenna group 3 including an antenna 5 and an antenna 6, and an antenna group 4 including an antenna 7 and an antenna 8;

wherein the encoding matrix is

$$\begin{bmatrix} x_1 & 0 & -x_2^* & 0 \\ x_2 & 0 & x_1^* & 0 \\ 0 & x_3 & 0 & -x_4^* \\ 0 & x_4 & 0 & x_3^* \end{bmatrix}$$, in which $x_1, x_2, x_3$ and $x_4$ rep-

resent the initial data; frequencies corresponding to different rows of the encoding matrix are different sub-carriers, specifically sub-carrier 1, sub-carrier 2, sub-carrier 3 and sub-carrier 4 in turn from top to down; spaces corresponding to different columns are different subspaces corresponding to the grouping beams generated by the antenna groups, specifically subspace 1, subspace 2, subspace 3 and subspace 4 in turn from left to right;

wherein the step for calculating weights according to channel information fed back by the terminal side and generating directional grouping beams corresponding to the antenna groups comprises:

an antenna group 1 corresponding to the subspace 1 calculates a first weight $[w_{11} \ w_{12}]$ by which a directional grouping beam 1 corresponding to the antenna group 1 is generated, and the data sent by the directional grouping

beam 1 is $\begin{bmatrix} x_1 w_{11} + x_1 w_{12} \\ x_2 w_{11} + x_2 w_{12} \\ 0 \\ 0 \end{bmatrix}$, wherein, for the

sub-carrier 1, the antenna 1 in the antenna group 1 transmits $x_1 w_{11}$, and the antenna 2 in the antenna group 1 transmits $x_1 w_{12}$; for the sub-carrier 2, the antenna 1 in the antenna group 1 transmits $x_2 w_{11}$, and the antenna 2 in the antenna group 1 transmits $x_2 w_{12}$;

the antenna group 2 corresponding to the subspace 2 calculates a second weight $[w_{21} \ w_{22}]$ by which a directional grouping beam 2 corresponding to the antenna group 2 is generated, and the data sent by the directional grouping

beam 2 is $\begin{bmatrix} 0 \\ 0 \\ x_3 w_{21} + x_3 w_{22} \\ x_4 w_{21} + x_4 w_{22} \end{bmatrix}$, wherein, for the

sub-carrier 3, the antenna 3 in the antenna group 2 transmits $x_3 w_{21}$, and the antenna 4 in the antenna group 2 transmits $x_3 w_{22}$; for the sub-carrier 4, the antenna 3 in the antenna group 2 transmits $x_4 w_{21}$, and the antenna 4 in the antenna is generated, and the data sent by the directional grouping beam 3 is $\begin{bmatrix} -x_2^* w_{31} - x_2^* w_{32} \\ x_1^* w_{31} + x_1^* w_{32} \\ 0 \\ 0 \end{bmatrix}$,

wherein, for the sub-carrier 1, the antenna 5 in the antenna group 3 transmits $-x_2^* w_{31}$, and the antenna 6 in the antenna group 3 transmits $-x_2^* w_{32}$; for the sub-carrier 2, the antenna 5 in the antenna group 3 transmits $x_1^* w_{31}$, and the antenna 6 in the antenna group 3 transmits $x_1^* w_{32}$; and

the antenna group 4 corresponding to the subspace 4 calculates a fourth weight $[w_{41} \ w_{42}]$ by which a directional grouping beam 4 corresponding to the antenna group 4 is generated, and the data sent by the directional grouping

beam 4 is $\begin{bmatrix} 0 \\ 0 \\ -x_4^* w_{41} - x_4^* w_{42} \\ x_3^* w_{41} + x_3^* w_{42} \end{bmatrix}$, wherein, for

the sub-carrier 3, an antenna 7 in the antenna group 4 transmits $-x_4^* w_{41}$, and the antenna 8 in the antenna group 4 transmits $-x_4^* w_{42}$; for the sub-carrier 4, the antenna 7 in the antenna group 4 transmits $x_3^* w_{41}$, and the antenna 8 in the antenna group 4 transmits $x_3^* w_{42}$.

2. A method for realizing multi-antenna transmission diversity, comprising:

setting (101) an encoding matrix; encoding (102) initial data according to the encoding matrix and obtaining an encoded matrix; obtaining (103) column data of the encoded matrix and mapping the encoded column data via virtual antenna ports to antenna groups corresponding to the subspaces; and

calculating (104) by an antenna group a weight according to channel information fed back by a terminal side and generating a directional grouping beam corresponding to the antenna group; wherein the antenna groups comprises an antenna group 1 including an antenna 1 and an antenna 2, an antenna group 2 including an antenna 3 and an antenna 4, an antenna group 3 including an antenna 5 and an antenna 6, and an antenna group 1 including an antenna 7 and an antenna 8;

wherein the encoding matrix is

$$\begin{bmatrix} x_1 & 0 & -x_2^* & 0 \\ x_2 & 0 & x_1^* & 0 \\ 0 & x_3 & 0 & -x_4^* \\ 0 & x_4 & 0 & x_3^* \end{bmatrix}$$, in which $x_1$, $x_2$, $x_3$ and

$x_4$ represent the initial data; frequencies corresponding to different rows of the encoding matrix are different sub-carriers, specifically sub-carrier 1, sub-carrier 2, sub-carrier 3 and sub-carrier 4 in turn from top to down; spaces corresponding to different columns are different subspaces corresponding to the grouping beams generated by the antenna groups, specifically subspace 1, subspace 2, subspace 3 and subspace 4 in turn from left to right;

wherein the step that the antenna group calculates a weight according to the channel information fed back by the terminal side and generates the directional grouping beam corresponding to the antenna group is that:

an antenna group 1 corresponding to the subspace 1 calculates a first weight [$w_{11}$ $w_{12}$] by which a directional grouping beam 1 corresponding to the antenna group 1 is generated, and the data sent by the directional grouping beam 1 is

$$\begin{bmatrix} x_1 w_{11} + x_1 w_{12} \\ x_2 w_{11} + x_2 w_{12} \\ 0 \\ 0 \end{bmatrix}$$, wherein, for the sub-carrier 1, the antenna 1 in the antenna group 1 transmits $x_1 w_{11}$, and the antenna 2 in the antenna group 1 transmits $x_1 w_{12}$; for the sub-carrier 2, the antenna 1 in the antenna group 1 transmits $x_2 w_{11}$, and the antenna 2 in the antenna group 1 transmits $x_2 w_{12}$;

the antenna group 2 corresponding to the subspace 2 calculates a second weight [$w_{21}$ $w_{22}$] by which a directional grouping beam 2 corresponding to the antenna group 2 is generated, and the data sent by the directional grouping beam 2 is

$$\begin{bmatrix} 0 \\ 0 \\ x_3 w_{21} + x_3 w_{22} \\ x_4 w_{21} + x_4 w_{22} \end{bmatrix}$$, wherein, for the sub-carrier 3, the antenna 3 in the antenna group 2 transmits $x_3 w_{21}$, and the antenna 4 in the antenna group 2 transmits $x_3 w_{22}$; for the sub-carrier 4, the antenna 3 in the antenna group 2 transmits $x_4 w_{21}$, and the antenna 4 in the antenna group 2 transmits $x_4 w_{22}$;

the antenna group 3 corresponding to the subspace 3 calculates a third weight [$w_{31}$ $w_{32}$] by which a directional grouping beam 3 corresponding to the antenna group 3 is generated, and the data sent by the directional grouping beam 3 is

$$\begin{bmatrix} -x_2^* w_{31} - x_2^* w_{32} \\ x_1^* w_{31} + x_1^* w_{32} \\ 0 \\ 0 \end{bmatrix}$$, wherein, for the sub-carrier 1, the antenna 5 in the antenna group 3 transmits $-x_2^* w_{31}$, and the antenna 6 in the antenna group 3 transmits $-x_2^* w_{32}$; for the sub-carrier 2, the antenna 5 in the antenna group 3 transmits $x_1^* w_{31}$, and the antenna 6 in the antenna group 3 transmits $x_1^* w_{32}$; and

the antenna group 4 corresponding to the subspace 4 calculates a fourth weight [$w_{41}$ $w_{42}$] by which a directional grouping beam 4 corresponding to the antenna group 4 is generated, and the data sent by the directional grouping beam 4 is

$$\begin{bmatrix} 0 \\ 0 \\ -x_4^* w_{41} - x_4^* w_{42} \\ x_3^* w_{41} + x_3^* w_{42} \end{bmatrix}$$, wherein, for the sub-carrier 3, an antenna 7 in the antenna group 4 transmits $-x_4^* w_{41}$, and the antenna 8 in the antenna group 4 transmits $-x_4^* w_{42}$; for the sub-carrier 4, the antenna 7 in the antenna group 4 transmits $x_3^* w_{41}$, and the antenna 8 in the antenna group 4 transmits $x_3^* w_{42}$.

3. The method according to claim 2, wherein a main lobe of the directional grouping beam directs a Direction of Arrival, DOA at which energy of transmission signals of the antennae in the antenna group is the greatest.

4. The method according to any one of claims 2 to 3, wherein the encoding is Space Frequency Block Codes, SFBC; the initial data $x_1$, $x_2$, $x_3$ and $x_4$ are processed with SFBC according to the encoding matrix, here, $\begin{bmatrix} x_1 & 0 & -x_2^* & 0 \end{bmatrix}$ is sent on the sub-carrier 1, $\begin{bmatrix} x_2 & 0 & x_1^* & 0 \end{bmatrix}$ is sent on the sub-carrier 2, $\begin{bmatrix} 0 & x_3 & 0 & -x_4^* \end{bmatrix}$ is sent on the sub-carrier 3, and $\begin{bmatrix} 0 & x_4 & 0 & -x_3^* \end{bmatrix}$ is sent on the sub-carrier 4.

5. The method according to claim 4, wherein $\begin{bmatrix} x_1 \\ x_2 \\ 0 \\ 0 \end{bmatrix}$ is mapped to antenna group 1 corresponding to the subspace 1, $\begin{bmatrix} 0 \\ 0 \\ x_3 \\ x_4 \end{bmatrix}$ is mapped to antenna group 2 corresponding to the subspace 2, $\begin{bmatrix} -x_2^* \\ x_1^* \\ 0 \\ 0 \end{bmatrix}$ is mapped

to antenna group 3 corresponding to the subspace 3, and $\begin{bmatrix} 0 \\ 0 \\ -x_4^* \\ x_3^* \end{bmatrix}$ is mapped to antenna group 4 corresponding to the subspace 4.

**Patentansprüche**

1. Vorrichtung zum Realisieren einer Mehrantennenübertragungsdiversität, die eine Einstelleinheit, eine Codiereinheit, eine Zuordnungseinheit und eine Gruppierungsstrahlerzeugungseinheit umfasst, wobei

die Einstelleinheit zum Einstellen einer Codierungsmatrix und Senden der Codierungsmatrix an die Codiereinheit verwendet wird;

die Codiereinheit zum Codieren von Anfangseingabedaten gemäß der Codierungsmatrix und Erhalten einer codierten Matrix verwendet wird;

die Zuordnungseinheit zum Erhalten von Spaltendaten der codierten Matrix von der Codiereinheit und Zuordnen der codierten Spaltendaten via virtuelle Antennenanschlüsse zu Antennengruppen, die Unterräumen entsprechen, verwendet wird; und

wobei die Gruppierungsstrahlerzeugungseinheit ferner zum Berechnen von Gewichtungen gemäß den Kanalinformationen, die von einer Endgeräteseite rückgemeldet werden, und Erzeugen von gerichteten Gruppierungsstrahlen, die Antennengruppen entsprechen, verwendet wird;

wobei die Antennengruppen eine Antennengruppe 1, die eine Antenne 1 und eine Antenne 2 beinhaltet, eine Antennengruppe 2, die eine Antenne 3 und eine Antenne 4 beinhaltet, eine Antennengruppe 3, die eine Antenne 5 und eine Antenne 6 beinhaltet, und eine Antennengruppe 4, die eine Antenne 7 und eine Antenne 8 beinhaltet, umfasst;

wobei die Codierungsmatrix

$$\begin{bmatrix} x_1 & 0 & -x_2^* & 0 \\ x_2 & 0 & x_1^* & 0 \\ 0 & x_3 & 0 & -x_4^* \\ 0 & x_4 & 0 & x_3^* \end{bmatrix}$$ ist, in der x1, x2, x3 und x4

die Anfangsdaten repräsentieren; Frequenzen, die verschiedenen Zeilen der Codierungsmatrix entsprechen, verschiedene Unterträger sind, speziell Unterträger 1, Unterträger 2, Unterträger 3 und Unterträger 4 abwechselnd von oben nach unten; Leerstellen, die verschiedenen Spalten entsprechen, verschiedene Unterräume sind, die den von den Antennengruppen erzeugten Gruppierungsstrahlen entsprechen, speziell Unterraum 1, Unterraum 2, Unterraum 3 und Unterraum 4 abwechselnd von links nach rechts;

wobei der Schritt zum Berechnen von Gewichtungen gemäß den Kanalinformationen, die von der Endgeräteseite rückgemeldet werden, und Erzeugen von gerichteten Gruppierungsstrahlen, die Antennengruppen entsprechen, Folgendes umfasst:

eine Antennengruppe 1, die dem Unterraum 1 entspricht, eine erste Gewichtung [w11, w12] berechnet, durch die ein gerichteter Gruppierungsstrahl 1, der der Antennengruppe 1 entspricht, erzeugt wird, und die Daten, die vom gerichteten Gruppierungsstrahl 1 gesendet werden,

$$\text{den, } \begin{bmatrix} x_1 w_{11} + x_1 w_{12} \\ x_2 w_{11} + x_2 w_{12} \\ 0 \\ 0 \end{bmatrix} \text{ sind,}$$

wobei für den Unterträger 1 die Antenne 1 in der Antennengruppe 1 $x_1 w_{11}$ überträgt, und die Antenne 2 in der Antennengruppe 1 $x_1 w_{12}$ überträgt; für den Unterträger 2 die Antenne 1 in der Antennengruppe 1 $x_2 w_{11}$ überträgt und die Antenne 2 in der Antennengruppe 1 $x_2 w_{12}$ überträgt;

die Antennengruppe 2, die dem Unterraum 2 entspricht, eine zweite Gewichtung [w21 w22] berechnet, durch die ein gerichteter Gruppierungsstrahl 2, der der Antennengruppe 2 entspricht, erzeugt wird, und die Daten, die vom gerichteten Gruppierungsstrahl 2 gesendet werden,

$$\begin{bmatrix} 0 \\ 0 \\ x_3 w_{21} + x_3 w_{22} \\ x_4 w_{21} + x_4 w_{22} \end{bmatrix} \text{ sind, ,}$$

wobei für den Unterträger 3 die Antenne 3 in der Antennengruppe 2 $x_3 w_{21}$ überträgt, und die Antenne 4 in der Antennengruppe 2 $x_3 w_{22}$ überträgt; für den Unterträger 4 die Antenne 3 in der Antennengruppe 2 $x_4 w_{21}$ überträgt und die Antenne 4 in der Antennengruppe 2 $x_4 w_{22}$ überträgt;

die Antennengruppe 3, die dem Unterraum 3 entspricht, eine dritte Gewichtung [w31 w32] berechnet, durch die ein gerichteter Gruppierungsstrahl 3, der der Antennengruppe 3 entspricht, erzeugt wird, und die Daten, die vom gerichteten Gruppierungsstrahl 3 gesendet werden,

$$\begin{bmatrix} -x_2^* w_{31} - x_2^* \mathbf{w}_{32} \\ x_1^* w_{31} + x_1^* \mathbf{w}_{32} \\ 0 \\ 0 \end{bmatrix} \text{ sind,}$$

wobei für den Unterträger 1 die Antenne 5 in der Antennengruppe 3 $-x_2^* w_{31}$ überträgt und die Antenne 6 in der Antennengruppe 3 $-x_2^* w_{32}$ überträgt; für den Unterträger 2, die Antenne 5 in der Antennengruppe 3 $x_1^* w_{31}$ überträgt und die Antenne 6 in der Antennengruppe 3 $x_1^* w_{32}$ überträgt; und

die Antennengruppe 4, die dem Unterraum 4 entspricht, eine vierte Gewichtung [w41 w42] berechnet, durch die ein gerichteter Gruppierungsstrahl 4, der der Antennengruppe 4 entspricht, erzeugt wird, und die Daten, die vom gerichteten Gruppierungsstrahl 4 gesendet werden,

$$\begin{bmatrix} 0 \\ 0 \\ -x_4^* w_{41} - x_4^* w_{42} \\ x_3^* w_{41} + x_3^* \mathbf{w}_{42} \end{bmatrix} \text{ sind,}$$

wobei für den Unterträger 3 eine Antenne 7 in der Antennengruppe 4 $-x_4^* w_{41}$ überträgt, und die Antenne 8 in der Antennengruppe 4 $-x_4^* w_{42}$ überträgt; für den Unterträger 4 die Antenne 7 in der Antennengruppe 4 $x_3^* w_{41}$ überträgt und die Antenne 8 in der Antennengruppe 4 $x_3^* w_{42}$ überträgt.

2. Verfahren zum Realisieren einer Mehrantennenübertragungsdiversität, das Folgendes umfasst:
Einstellen (101) einer Codierungsmatrix;

Codieren (102) von Anfangsdaten gemäß der Codierungsmatrix und Erhalten einer codierten Matrix;
Erhalten (103) von Spaltendaten der codierten Matrix und Zuordnen der codierten Spaltendaten via virtuelle Antennenanschlüsse zu Antennengruppen, die den Unterräumen entsprechen; und
Berechnen (104) durch eine Antennengruppe einer Gewichtung gemäß den Kanalinformationen, die von einer Endgeräteseite rückgemeldet werden, und Erzeugen eines gerichteten Gruppierungsstrahls, der der Antennengruppe entspricht;

wobei die Antennengruppen eine Antennengruppe 1, die eine Antenne 1 und eine Antenne 2 beinhaltet, eine Antennengruppe 2, die eine Antenne 3 und eine Antenne 4 beinhaltet, eine Antennengruppe 3, die eine Antenne 5 und eine Antenne 6 beinhaltet, und eine Antennengruppe 1, die eine Antenne 7 und eine Antenne 8 beinhaltet, umfasst;

wobei die Codierungsmatrix ist,

$$\begin{bmatrix} x_1 & 0 & -x_2^* & 0 \\ x_2 & 0 & x_1^* & 0 \\ 0 & x_3 & 0 & -x_4^* \\ 0 & x_4 & 0 & x_3^* \end{bmatrix}$$

in der $x_1$, $x_2$, $x_3$ und $x_4$ die Anfangsdaten repräsentieren; Frequenzen, die verschiedenen Zeilen der Codierungsmatrix entsprechen, verschiedene Unterträger sind, speziell Unterträger 1, Unterträger 2, Unterträger 3 und Unterträger 4 abwechselnd von oben nach unten; Leerstellen, die verschiedenen Spalten entsprechen, verschiedene Unterräume sind, die den von den Antennengruppen erzeugten Gruppierungsstrahlen entsprechen, speziell Unterraum 1, Unterraum 2, Unterraum 3 und Unterraum 4 abwechselnd von links nach rechts;

wobei der Schritt, in dem die Antennengruppe eine Gewichtung gemäß den Kanalinformationen, die von der Endgeräteseite rückgemeldet werden, berechnet und den gerichteten Gruppierungsstrahl erzeugt, der der Antennengruppe entspricht, darin besteht, dass:

eine Antennengruppe 1, die dem Unterraum 1 entspricht, eine erste Gewichtung [$w_{11}$ $w_{12}$] berechnet, durch die ein gerichteter Gruppierungsstrahl 1, der der Antennengruppe 1 entspricht, erzeugt wird, und die Daten, die vom gerichteten Gruppierungsstrahl 1 gesendet werden,

$$\begin{bmatrix} x_1 w_{11} + x_1 w_{12} \\ x_2 w_{11} + x_2 w_{12} \\ 0 \\ 0 \end{bmatrix}$$

sind,

wobei für den Unterträger 1 die Antenne 1 in der Antennengruppe 1 $x_1 w_{11}$ überträgt, und die Antenne 2 in der Antennengruppe 1 $x_1 w_{12}$ über-

trägt; für den Unterträger 2 die Antenne 1 in der Antennengruppe 1 $x_2 w_{11}$ überträgt und die Antenne 2 in der Antennengruppe 1 $x_2 w_{12}$ überträgt;

die Antennengruppe 2, die dem Unterraum 2 entspricht, eine zweite Gewichtung [$w_{21}$ $w_{22}$] berechnet, durch die ein gerichteter Gruppierungsstrahl 2, der der Antennengruppe 2 entspricht, erzeugt wird, und die Daten, die vom gerichteten Gruppierungsstrahl 2 gesendet werden,

$$\begin{bmatrix} 0 \\ 0 \\ x_3 w_{21} + x_3 w_{22} \\ x_4 w_{21} + x_4 w_{22} \end{bmatrix}$$

sind, wobei für den Unterträger 3 die Antenne 3 in der Antennengruppe 2 $x_3 w_{21}$ überträgt, und die Antenne 4 in der Antennengruppe 2 $x_3 w_{22}$ überträgt; für den Unterträger 4 die Antenne 3 in der Antennengruppe 2 $x_4 w_{21}$ überträgt und die Antenne 4 in der Antennengruppe 2 $x_4 w_{22}$ überträgt;

die Antennengruppe 3, die dem Unterraum 3 entspricht, eine dritte Gewichtung [$w_{31}$ $w_{32}$] berechnet, durch die ein gerichteter Gruppierungsstrahl 3, der der Antennengruppe 3 entspricht, erzeugt wird, und die Daten, die vom gerichteten Gruppierungsstrahl 3 gesendet werden,

$$\begin{bmatrix} -x_2^* w_{31} - x_2^* w_{32} \\ x_1^* w_{31} + x_1^* w_{32} \\ 0 \\ 0 \end{bmatrix}$$

sind,

wobei für den Unterträger 1 die Antenne 5 in der Antennengruppe 3 - $x_2^* w_{31}$ überträgt und die Antenne 6 in der Antennengruppe 3 - $x_2^* w_{32}$ überträgt; für den Unterträger 2 die Antenne 5 in der Antennengruppe 3 $x^*_1 w_{31}$ überträgt und die Antenne 6 in der Antennengruppe 3 $x_1^* w_{32}$ überträgt und

die Antennengruppe 4, die dem Unterraum 4 entspricht, eine vierte Gewichtung [$w_{41}$ $w_{42}$] berechnet, durch die ein gerichteter Gruppierungsstrahl 4, der der Antennengruppe 4 entspricht, erzeugt wird, und die Daten, die vom gerichteten Gruppierungsstrahl 4 gesendet werden,

$$\begin{bmatrix} 0 \\ 0 \\ -x_4^* w_{41} - x_4^* w_{42} \\ x_3^* w_{41} + x_3^* w_{42} \end{bmatrix}$$

sind, wobei für den Unterträger 3 eine Antenne 7 in der Antennengruppe

4 $-x_4^*w_{41}$ überträgt, und die Antenne 8 in der Antennengruppe 4 $-x_4^*w_{42}$ überträgt; für den Unterträger 4 die Antenne 7 in der Antennengruppe 4 $x_3^*w_{41}$ überträgt und die Antenne 8 in der Antennengruppe 4 $x_3^*w_{42}$ überträgt.

3. Verfahren nach Anspruch 2, wobei eine Hauptkeule des gerichteten Gruppierungsstrahls eine Ankunftsrichtung, DOA, richtet, in der eine Energie von Übertragungssignalen der Antennen in der Antennengruppe am größten ist.

4. Verfahren nach einem der Ansprüche 2 bis 3, wobei die Codierung Raumfrequenzblockcodes, SFBC, ist; die Anfangsdaten $x_1$, $x_2$, $x_3$ und $x_4$ mit SFBC gemäß der Codierungsmatrix hier verarbeitet werden,

$\begin{bmatrix} x_1 & 0 & -x_2^* & 0 \end{bmatrix}$ auf dem Unterträger 1 gesendet wird, $\begin{bmatrix} x_2 & 0 & x_1^* & 0 \end{bmatrix}$ auf dem Unterträger 2 gesendet wird, $\begin{bmatrix} 0 & x_3 & 0 & -x_4^* \end{bmatrix}$ auf dem Unterträger 3 gesendet wird und $\begin{bmatrix} 0 & x_4 & 0 & -x_3^* \end{bmatrix}$ auf dem Unterträger 4 gesendet wird.

5. Verfahren nach Anspruch 4, wobei der $\begin{bmatrix} x_1 \\ x_2 \\ 0 \\ 0 \end{bmatrix}$ Antennengruppe 1 zugeordnet wird, die dem Unterraum 1 entspricht, $\begin{bmatrix} 0 \\ 0 \\ x_3 \\ x_4 \end{bmatrix}$ der Antennengruppe 2 zugeordnet wird, die dem Unterraum 2 entspricht, $\begin{bmatrix} -x_2^* \\ x_1^* \\ 0 \\ 0 \end{bmatrix}$ der Antennengruppe 3 zugeordnet wird, die dem Unterraum 3 entspricht, und $\begin{bmatrix} 0 \\ 0 \\ -x_4^* \\ x_3^* \end{bmatrix}$ der Antennengruppe 4 zugeordnet wird, die dem Unterraum 4 entspricht.

## Revendications

1. Dispositif permettant de réaliser une diversité de transmission à antennes multiples, comprenant une unité de réglage, une unité de codage, une unité de mise en correspondance et une unité de génération de faisceau de groupage, dans lequel

l'unité de réglage est utilisée pour paramétrer une matrice de codage et envoyer la matrice de codage à l'unité de codage ;

l'unité de codage est utilisée pour coder des données initiales d'entrée en fonction de la matrice de codage et obtenir une matrice codée ;

l'unité de mise en correspondance est utilisée pour obtenir des données de colonne de la matrice codée à partir de l'unité de codage et la mise en correspondance des données de colonne codées par le biais de ports d'antenne virtuels avec des groupes d'antennes correspondant à des sous-espaces ; et

dans lequel l'unité de génération de faisceau de groupage est en outre utilisée pour calculer des poids en fonction d'informations de canal renvoyées par un côté terminal et générer des faisceaux de groupage directionnels correspondant aux groupes d'antennes ;

dans lequel les groupes d'antennes comprennent un groupe d'antennes 1 comprenant une antenne 1 et une antenne 2, un groupe d'antennes 2 comprenant une antenne 3 et une antenne 4, un groupe d'antennes 3 comprenant une antenne 5 et une antenne 6 et un groupe d'antennes 4 comprenant une antenne 7 et une antenne 8 ;

la matrice de codage étant

$$\begin{bmatrix} x_1 & 0 & -x_2^* & 0 \\ x_2 & 0 & x_1^* & 0 \\ 0 & x_3 & 0 & -x_4^* \\ 0 & x_4 & 0 & x_3^* \end{bmatrix}$$, où $x_1$, $x_2$, $x_3$ et $x_4$ représentent

les données initiales ; des fréquences correspondant aux différentes rangées de la matrice de codage étant des sous-porteuses, en particulier la sous-porteuse 1, la sous-porteuse 2, la sous-porteuse 3 et la sous-porteuse 4, l'une après l'autre de haut en bas ; des espaces correspondant aux différentes colonnes étant différents sous-espaces correspondant aux faisceaux de groupage générés par les groupes d'antennes, en particulier le sous-espace 1, le sous-espace 2, le sous-espace 3 et le sous-espace 4 l'un après l'autre de gauche à droite ;

dans lequel l'étape de calcul de poids en fonction d'informations de canal renvoyées par le côté terminal et de génération de faisceaux de groupage directionnels correspondant aux groupes d'antennes comprend :

un groupe d'antennes 1 correspondant au sous-espace 1 calculant un premier poids [$w_{11}$, $w_{12}$] par lequel un faisceau de groupage directionnel 1 correspondant au groupe d'antennes 1 est généré, et les données envoyées par le faisceau de groupage directionnel 1 étant

$$\begin{bmatrix} x_1 w_{11} + x_1 w_{12} \\ x_2 w_{11} + x_2 w_{12} \\ 0 \\ 0 \end{bmatrix}$$

dans lequel, pour la sous-porteuse 1, l'antenne 1 dans le groupe d'antennes 1 transmet $x_1 w_{11}$, et l'antenne 2 dans le groupe d'antennes 1 transmet $x_1 w_{12}$ ; pour la sous-porteuse 2, l'antenne 1 dans le groupe d'antennes 1 transmet $x_2 w_{11}$, et l'antenne 2 dans le groupe d'antennes 1 transmet $x_2 w_{12}$ ;

le groupe d'antennes 2 correspondant au sous-espace 2 calculant un deuxième poids [$w_{21}$ $w_{22}$] par lequel un faisceau de groupage directionnel 2 correspondant au groupe d'antennes 2 est généré, et les données envoyées par le faisceau de groupage directionnel 2 étant

$$\begin{bmatrix} 0 \\ 0 \\ x_3 w_{21} + x_3 w_{22} \\ x_4 w_{21} + x_4 w_{22} \end{bmatrix}$$

dans lequel, pour la sous-porteuse 3, l'antenne 3 dans le groupe d'antennes 2 transmet $x_3 w_{21}$, et l'antenne 4 dans le groupe d'antennes 2 transmet $x_3 w_{22}$ ; pour la sous-porteuse 4, l'antenne 3 dans le groupe d'antennes 2 transmet $x_4 w_{21}$, et l'antenne 4 dans le groupe d'antennes 2 transmet $x_4 w_{22}$ ;

le groupe d'antennes 3 correspondant au sous-espace 3 calculant un troisième poids [$w_{31}$ $w_{32}$] par lequel un faisceau de groupage directionnel 3 correspondant au groupe d'antennes 3 est généré, et les données envoyées par le faisceau de groupage directionnel 3 étant

$$\begin{bmatrix} -x_2^* w_{31} - x_2^* w_{32} \\ x_1^* w_{31} + x_1^* w_{32} \\ 0 \\ 0 \end{bmatrix}$$

dans lequel, pour la sous-porteuse 1, l'antenne 5 dans le groupe d'antennes 3 transmet $-x_2^* w_{31}$, et l'antenne 6 dans le groupe d'antennes 3 transmet $x_2^* w_{32}$ ; pour la sous-porteuse 2, l'antenne 5 dans le groupe d'antennes 3 transmet $x_1^* w_{31}$, et l'antenne 6 dans le groupe d'antennes 3 transmet $x_1^* w_{32}$ ; et

le groupe d'antennes 4 correspondant au sous-espace 4 calculant un quatrième poids [$w_{41}$ $w_{42}$] par lequel un faisceau de groupage directionnel 4 correspondant au groupe d'antennes 4 est généré, et les données envoyées par le faisceau de groupage directionnel 4 étant

$$\begin{bmatrix} 0 \\ 0 \\ -x_4^* w_{41} - x_4^* w_{42} \\ x_3^* w_{41} + x_3^* w_{42} \end{bmatrix}$$

dans lequel, pour la sous-porteuse 3, une antenne 7 dans le groupe d'antennes 4 transmet $-x_4^* w_{41}$, et l'antenne 8 dans le groupe d'antennes 4 transmet $-x_4^* w_{42}$ ; pour la sous-porteuse 4, l'antenne 7 dans le groupe d'antennes 4 transmet $x_3^* w_{41}$ et l'antenne 8 dans le groupe d'antennes 4 transmet $x_3^* w_{42}$.

2. Procédé permettant de réaliser une diversité de transmission à antennes multiples, comprenant :

le réglage (101) d'une matrice de codage ;
le codage (102) de données initiales en fonction de la matrice de codage et l'obtention d'une matrice codée ;
l'obtention (103) de données de colonne de la matrice codée et la mise en correspondance des données de colonne codées par le biais de ports d'antenne virtuels avec des groupes d'antennes correspondant à des sous-espaces ; et
le calcul (104) par un groupe d'antennes d'un poids en fonction d'informations de canal renvoyées par un côté terminal et la génération d'un faisceau de groupage directionnel correspondant au groupe d'antennes :

dans lequel les groupes d'antennes comprennent un groupe d'antennes 1 comprenant une antenne 1 et une antenne 2, un groupe d'antennes 2 comprenant une antenne 3 et une antenne 4, un groupe d'antennes 3 comprenant une antenne 5 et une antenne 6 et un groupe d'antennes 1 comprenant une antenne 7 et une antenne 8 ;

la matrice de codage étant

$$\begin{bmatrix} x_1 & 0 & -x_2^* & 0 \\ x_2 & 0 & x_1^* & 0 \\ 0 & x_3 & 0 & -x_4^* \\ 0 & x_4 & 0 & x_3^* \end{bmatrix},$$

où $x_1$, $x_2$, $x_3$ et $x_4$ représentent les données initiales ; des fréquences correspondant à différentes rangées de la matrice de codage sont différentes sous-porteuses, en particulier la sous-porteuse 1, la sous-porteuse 2, la sous-porteuse 3 et la sous-porteuse 4, l'une après l'autre de bas en haut ; des espaces correspondant à différentes colonnes sont différents sous-espaces correspondant aux faisceaux de groupage générés par les groupes d'antennes, en particulier le sous-espace 1, le sous-espace 2, le sous-espace 3 et le sous-espace 4, l'un après l'autre de gauche à droite ;

dans lequel l'étape selon laquelle le groupe d'antennes calcule un poids en fonction d'informations de canal renvoyées par le côté terminal et génère le faisceau de groupage directionnel correspondant au groupe d'antennes est que :

un groupe d'antennes 1 correspondant au sous-espace 1 calculant un premier poids $[w_{11}\ w_{12}]$ par lequel un faisceau de groupage directionnel 1 correspondant au groupe d'antennes 1 est généré, et les données envoyées par le faisceau de groupage directionnel 1 étant

$$\begin{bmatrix} x_1 w_{11} + x_1 w_{12} \\ x_2 w_{11} + x_2 w_{12} \\ 0 \\ 0 \end{bmatrix},$$

dans lequel, pour la sous-porteuse 1, l'antenne 1 dans le groupe d'antennes 1 transmet $x_1 w_{11}$, et l'antenne 2 dans le groupe d'antennes 1 transmet $x_1 w_{12}$ ; pour la sous-porteuse 2, l'antenne 1 dans le groupe d'antennes 1 transmet $x_2 w_{11}$, et l'antenne 2 dans le groupe d'antennes 1 transmet $x_2\ w_{12}$ ; le groupe d'antennes 2 correspondant au sous-espace 2 calculant un deuxième poids $[w_{21}\ w_{22}]$ par lequel un faisceau de groupage directionnel 2 correspondant au groupe d'antennes 2 est généré, et les données envoyées par le faisceau de regroupement direction-nel 2 étant

$$\begin{bmatrix} 0 \\ 0 \\ x_3 w_{21} + x_3 w_{22} \\ x_4 w_{21} + x_4 w_{22} \end{bmatrix},$$

dans lequel, pour la sous-porteuse 3, l'antenne 3 dans le groupe d'antennes 2 transmet $x_3 w_{21}$, et l'antenne 4 dans le groupe d'antennes 2 transmet $x_3 w_{22}$ ; pour la sous-porteuse 4, l'antenne 3 dans le groupe d'antennes 2 transmet $x_4 w_{21}$, et l'antenne 4 dans le groupe d'antennes 2 transmet $x_4\ w_{22}$ ; le groupe d'antennes 3 correspondant au sous-espace 3 calculant un troisième poids $[w_{31}\ w_{32}]$ par lequel un faisceau de groupage directionnel 3 correspondant au groupe d'antennes 3 est généré, et les données envoyées par le faisceau de groupage directionnel 3 étant

$$\begin{bmatrix} -x_2^* w_{31} - x_2^* w_{32} \\ x_1^* w_{31} + x_1^* w_{32} \\ 0 \\ 0 \end{bmatrix},$$

dans lequel, pour la sous-porteuse 1, l'antenne 5 dans le groupe d'antennes 3 transmet $-x_2^* w_{31}$ et l'antenne 6 dans le groupe d'antennes 3 transmet $-x_2^* w_{32}$ ; pour la sous-porteuse 2, l'antenne 5 dans le groupe d'antennes 3 transmet $x_1^* w_{31}$ et l'antenne 6 dans le groupe d'antennes 3 transmet $x_1^* w_{32}$ ; et

le groupe d'antennes 4 correspondant au sous-espace 4 calculant un quatrième poids $[w_{41}\ w_{42}]$ par lequel un faisceau de groupage directionnel 4 correspondant au groupe d'antennes 4 est généré, et les données envoyées par le faisceau de groupage directionnel 4

$$\begin{bmatrix} 0 \\ 0 \\ -x_4^* w_{41} - x_4^* w_{42} \\ x_3^* w_{41} + x_3^* w_{42} \end{bmatrix},$$

dans lequel, pour la sous-porteuse 3, une antenne 7 dans le groupe d'antennes 4 transmet $-x_4^*w_{41}$, et l'antenne 8 dans le groupe d'antennes 4 transmet $-x_4^*w_{42}$ ; pour la sous-porteuse 4, l'antenne 7 dans le groupe d'antennes 4 transmet $x_3^*w_{41}$, et l'antenne 8 dans le groupe d'antennes 4 transmet $x_3^*w_{42}$.

**3.** Procédé selon la revendication 2, dans lequel un lobe principal du faisceau de groupage directionnel dirige une Direction d'Arrivée, DOA pour laquelle une énergie de signaux de transmission des antennes dans le groupe d'antennes est la plus grande.

**4.** Procédé selon l'une quelconque des revendications 2 et 3, dans lequel le codage consiste en des codes de blocs à fréquence spatiale (SFBC) ; les données initiales $x_1$, $x_2$, $x_3$ et $x_4$ sont traitées par SFBC en fonction de la matrice codée, ici,

$$\begin{bmatrix} x_1 & 0 & -x_2^* & 0 \end{bmatrix}$$ est envoyé sur la sous-porteuse 1, $$\begin{bmatrix} x_2 & 0 & x_1^* & 0 \end{bmatrix}$$

$$\begin{bmatrix} x_2 & 0 & x_1^* & 0 \end{bmatrix}$$ est envoyé sur la sous-porteuse 2, est $$\begin{bmatrix} 0 & x_3 & 0 & -x_4^* \end{bmatrix}$$ envoyé sur la sous-porteuse 3 $$\begin{bmatrix} 0 & x_4 & 0 & -x_3^* \end{bmatrix}$$ et est envoyé sur la sous-porteuse 4.

**5.** Procédé selon la revendication 4, dans $$\begin{bmatrix} x_1 \\ x_2 \\ 0 \\ 0 \end{bmatrix}$$ lequel est mis en correspondance avec le groupe d'antennes 1 correspondant au sous-espace 1, $$\begin{bmatrix} 0 \\ 0 \\ x_3 \\ x_4 \end{bmatrix}$$ est mis en correspondance avec le groupe d'antennes 2 correspondant au sous-espace 2, $$\begin{bmatrix} -x_2^* \\ x_1^* \\ 0 \\ 0 \end{bmatrix}$$

est mis en correspondance avec le groupe d'antennes 3 correspondant au sous-espace 3,

et $$\begin{bmatrix} 0 \\ 0 \\ -x_4^* \\ x_3^* \end{bmatrix}$$ est mis en correspondance avec le groupe d'antennes 4 correspondant au sous-espace 4.

Fig. 1

```
┌─────────────────────┐
│    Setting unit     │
└─────────────────────┘
           │
┌─────────────────────┐
│   Encoding unit     │
└─────────────────────┘
           │
┌─────────────────────┐
│    Mapping unit     │
└─────────────────────┘
           │
┌─────────────────────┐
│   Grouping beam     │
│   generating unit   │
└─────────────────────┘
```

Fig. 2

┌─────────────────────────────────────────────────────┐
│                                                       │      101
│     Setting an encoding matrix by the setting unit    │
│                                                       │
└─────────────────────────────────────────────────────┘

┌─────────────────────────────────────────────────────┐
│  Inputting initial data to the encoding unit and      │      102
│  encoding the initial data by the encoding unit        │
│  according to the encoding matrix                      │
└─────────────────────────────────────────────────────┘

┌─────────────────────────────────────────────────────┐
│  Obtaining encoded column data and mapping the        │      103
│  encoded column data to antenna groups corresponding  │
│  to subspaces by the mapping unit                     │
└─────────────────────────────────────────────────────┘

┌─────────────────────────────────────────────────────┐
│  Performing beam generation and generating grouping   │      104
│  beams corresponding to the antenna groups by the     │
│  grouping beam generating unit                        │
└─────────────────────────────────────────────────────┘

Fig. 3

| Antenna 1 | Antenna 2 | Antenna 3 | Antenna 4 | Antenna 5 | Antenna 6 | Antenna 7 | Antenna 8 |

Virtual antenna port 1    Virtual antenna port 2    Virtual antenna port 3    Virtual antenna port 4

Fig. 4

**EP 2 388 926 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2007105904 A2

- WO 2008077056 A1